# EUROPÄISCHE PATENTSCHRIFT

(11) **EP 2 222 744 B1**
(45) Veröffentlichungstag und Bekanntmachung des Hinweises auf die Patenterteilung: **22.01.2020**
(21) Anmeldenummer: 08858652.4
(22) Anmeldetag: 12.12.2008
(51) Int. Cl.: C08G 18/10, C08G 18/12, C08G 18/28, C08G 18/32, C08G 18/72, C08G 18/75, C09D 175/04

(54) **CYCLOALIPHATISCHE STRUKTURELEMENTE ENTHALTENDE POLYISOCYANATGEMISCHE**
POLYISOCYANATE MIXTURES CONTAINING ALICYCLIC STRUCTURAL ELEMENTS
MÉLANGES POLYISOCYANATE CONTENANT DES ÉLÉMENTS STRUCTURELS CYCLOALIPHATIQUES

(30) Priorität: 12.12.2007 DE 102007059859
(43) Veröffentlichungstag der Anmeldung: 01.09.2010
(73) Patentinhaber: Covestro Deutschland AG, 51373 Leverkusen (DE)
(72) Erfinder: LAAS, Hans-Josef, 51519 Odenthal (DE); HALPAAP, Reinhard, 51519 Odenthal (DE); MAGER, Dieter, 51373 Leverkusen (DE); MECHTEL, Markus, 51467 Bergisch Gladbach (DE); EHLERS, Michael, 47829 Krefeld (DE); HERTRAMPF, Reinhard, 40764 Langenfeld (DE)
(74) Vertreter: Levpat
(86) Internationale Anmeldenummer: PCT/EP2008/010561
(87) Internationale Veröffentlichungsnummer: WO 2009/074332

(56) Entgegenhaltungen:
- EP-A2- 1 134 247
- WO-A-97/16467
- GB-A- 2 123 841
- US-A- 6 096 835
- US-B1- 6 562 894

## Beschreibung

Die vorliegende Erfindung betrifft neuartige, cycloaliphatische Strukturelemente enthaltende Polyisocyanatgemische mit ausschließlich linearaliphatisch gebundenen freien Isocyanatgruppen, ein Verfahren zu ihrer Herstellung und ihre Verwendung als Ausgangskomponente bei der Herstellung von Polyurethan-Kunststoffen, insbesondere als Vernetzerkomponente in Polyurethanlacken und -beschichtungen.

Zweikomponenten-Polyurethanlacke (2K-PUR) haben aufgrund ihrer hervorragenden technologischen Eigenschaften für eine Vielzahl unterschiedlichster Anwendungsgebiete Bedeutung erlangt. Als Vernetzerkomponenten für lichtbeständige, nicht vergilbende 2K-PUR-Lacke und -Beschichtungen dienen in der Regel Polyisocyanate auf Basis linearaliphatischer bzw. cycloaliphatischer Diisocyanate.

In der Mehrzahl der Anwendungsgebiete von 2K-PUR-Lacken kommen heute Polyisocyanate auf Basis von 1,6-Diisocyanatohexan (HDI) zum Einsatz. Diese führen bereits bei niedrigen Temperaturen zu Beschichtungen mit guten Beständigkeiten gegenüber chemischer und mechanischer Belastung, zeigen dabei aber in vielen Fällen eine nicht ausreichende Trocknungsgeschwindigkeit und vergleichsweise geringe Endhärten.

Dies gilt auch für die Verwendung spezieller hochfunktioneller HDI-Polyisocyanate, beispielsweise hochfunktioneller HDI-Trimerisate, die häufig als Vernetzerkomponenten zur Formulierung schnelltrocknender 2K-PUR-Lacke empfohlen werden (siehe z. B. Produktinformation Tolonate XFD 90 B, Rhodia PCS). Mit Hilfe solcher Vernetzer läßt sich zwar die Trocknungsgeschwindigkeit gegenüber Standardvemetzem durchaus steigern, eine höhere Endhärte der Lackfilme wird aber nicht erreicht.

Hinsichtlich erzielbarer Filmhärte besitzen Polyisocyanatvernetzer auf Basis cycloaliphatischer Diisocyanate, wie z. B. Isophorondiisocyanat (IPDI), deutliche Vorteile. Während Polyisocyanate auf Basis von linearaliphatischen Diisocyanaten sich vor allem durch niedrige Viskositäten auszeichnen und Lackfilme hoher Elastizität ergeben, stellen cycloaliphatische Polyisocyanate in lösemittelfreier Form hochviskose bis feste Produkte dar, die zu einer raschen physikalischen Antrocknung eines Lackansatzes führen und Beschichtungen sehr hoher Härte liefern.

HDI-Polyisocyanate werden daher häufig in Kombination mit entsprechenden cycloaliphatischen Polyisocyanaten, beispielsweise solchen auf Basis von IPDI, eingesetzt (siehe z. B. U. Meier - Westhues, Polyurethane - Lacke, Kleb- und Dichtstoffe, Vincentz Network 2007, S. 166). Auf diese Weise kann die Trocknung der Lackfilme und insbesondere die Härteentwicklung erheblich beschleunigt werden. Zur vollständigen chemischen Vernetzung benötigen cycloaliphatische Polyisocyanate aufgrund der geringeren Reaktivität ihrer Isocyanatgruppen allerdings Temperaturen im Bereich von 100°C oder darüber. Bei Raumtemperatur oder leicht forcierter Trocknung (ca. 60°C) erhält man zwar schnell grifftrockene, harte Lackfilme, die jedoch eine geringere Lösemittel- und Chemikalienbeständigkeit aufweisen als ausschließlich mit HDI-Polyisocyanaten vernetzte Beschichtungen.

Aufgabe der vorliegenden Erfindung war es daher, neue Polyisocyanate zur Verfügung zu stellen, die sich für sämtliche Anwendungsgebiete aliphatischer Polyisocyanate, insbesondere als Vernetzerkomponenten für 2K Polyurethanlacke, eignen und nicht mit den Nachteilen des Standes der Technik behaftet sind. Diese neuen Polyisocyanatvernetzer sollten die Formulierung schnelltrocknender Lacksysteme ermöglichen, die gleichzeitig bereits bei niedrigen Temperaturen zu harten, lösemittel- und chemikalienbeständigen Beschichtungen aushärten.

Diese Aufgabe konnte nun durch die nachfolgend beschriebene Erfindung gelöst werden.

Gegenstand der Erfindung ist ein Verfahren zur Herstellung von Polyisocyanatgemischen, enthaltend cycloaliphatische Strukturelemente sowie, bezogen auf die lösemittelfreie Form, einen Gehalt an linearaliphatisch gebundenen freien Isocyanatgruppen von 4,0 bis 26,0 Gew.-% und eine mittlere NCO-Funktionalität von 1,9 bis 8,0, bei dem
A) eine Polyisocyanatkomponente einer mittleren Funktionalität von 2,0 bis 5,0, mit einem Gehalt an linearaliphatisch gebundenen Isocyanatgruppen (berechnet als NCO; Molekulargewicht = 42) von 8,0 bis 27,0 Gew.-%
   mit
B) 2 bis 80 Gew.-%, bezogen auf die Gesamtmenge der eingesetzten Komponenten A) und B), mindestens eines auf einem cycloaliphatischen Di- und/oder Polyisocyanat basierenden isocyanatgruppenfreien, gegebenenfalls Harnstoffgruppen enthaltenden Hydroxyurethans eines zahlenmittleren Molekulargewichtes von 260 bis 8000 g/mol, das eine mittlere OH-Funktionalität von 1,0 bis 6,0 aufweist,
umgesetzt wird. Gegenstand der Erfindung sind ferner die so erhältlichen Polyisocyanatgemische sowie die Verwendung der nach diesem Verfahren erhältlichen Produkte als Ausgangskomponenten bei der Herstellung von Polyurethankunststoffen, insbesondere als Vernetzerkomponente in Polyurethanlacken und -beschichtungen.

Im Rahmen der vorliegenden Erfindung wird zwischen "linearaliphatisch" und "cycloaliphatisch" gebundenen Isocyanatgruppen unterschieden, wobei sich diese Begriffe auf die chemische Struktur der erfindungsgemäß eingesetzten Diisocyanate bzw. daraus hergestellten Polyisocyanaten beziehen. Unter "linearaliphatischen" Diisocyanaten werden solche Verbindungen verstanden, die völlig frei von cyclischen Strukturelementen sind, während bei den "cycloaliphatischen" Diisocyanaten zwingend mindestens eine Isocyanatgruppe an einem cycloaliphatischen Ring gebunden vorliegt.

Die beim erfindungsgemäßen Verfahren einzusetzende Polyisocyanatkomponente A) weist in der Regel eine (mittlere) NCO-Funktionalität von 2,0 bis 5,0, bevorzugt von 2,3 bis 4,5, einen Gehalt an Isocyanatgruppen von 8,0 bis 27,0 Gew.-%, bevorzugt 14,0 bis 24,0 Gew.-% und einen Gehalt an monomeren Diisocyanaten von weniger als 1 Gew.-%, bevorzugt weniger als 0,5 Gew.-% auf. Sie umfassen mindestens ein organisches, ausschließlich linearaliphatisch gebundene Isocyanatgruppen aufweisendes Polyisocyanat.

Es handelt sich bei den Polyisocyanaten der Komponente A) um beliebige, durch Modifizierung einfacher linearaliphatischer Diisocyanate hergestellte, aus mindestens zwei Diisocyanaten aufgebaute Polyisocyanate mit Uretdion-, Isocyanurat-, Allophanat-, Biuret-, Iminooxadiazindion- und/oder Oxadiazintrionstruktur, wie sie beispielsweise in J. Prakt. Chem. 336 (1994) 185 - 200, in DE-A 1 670 666 und EP-A 0 798 299 beispielhaft beschrieben sind.

Geeignete Diisocyanate zur Herstellung solcher Polyisocyanate sind beliebige durch Phosgenierung oder nach phosgenfreien Verfahren, beispielsweise durch thermische Urethanspaltung, zugängliche linearaliphatische Diisocyanate, d. h. solche, die keine cycloaliphatischen Strukturen aufweisen. Bevorzugte linearaliphatische Diisocyanate sind solche des Molekulargewichtsbereichs 140 bis 336 g/mol, wie 1,4-Diisocyanatobutan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, oder beliebige Gemische solcher Diisocyanate.

Bevorzugt werden in A) ausschließlich Polyisocyanate mit linearaliphatisch gebundenen Isocyanatgruppen eingesetzt, so dass die nach dem erfindungsgemäßen Verfahren erhältlichen Polyisocyanatgemische ausschließlich linearaliphatisch gebundene Isocyanatguppen aufweisen.

Bevorzugt handelt es sich bei den in A) eingesetzten Polyisocyanaten um solche der vorgenannten Art mit Uretdion-, Isocyanurat-, Allophanat-, Biuret- und/oder Iminooxadiazindionstruktur auf Basis von HDI.

Ganz besonders bevorzugt werden in A) als Ausgangskomponenten HDI-Polyisocyanate mit Isocyanuratstruktur und/oder Iminooxadiazindionstruktur eingesetzt.

Die beim erfindungsgemäßen Verfahren einzusetzende Komponente B) enthält mindestens ein auf einem cycloaliphatischen Di- und/oder Polyisocyanat basierendes isocyanatgruppenfreies, gegebenenfalls Harnstoffgruppen enthaltendes Hydroxyurethan eines mittleren Molekulargewichtes von 260 bis 8000 g/mol, bevorzugt von 275 bis 6000 g/mol, besonders bevorzugt von 290 bis 5000 g/mol, das eine mittlere OH-Funktionalität von 1,0 bis 6,0, bevorzugt von 1,5 bis 4,0, besonders bevorzugt von 2,0 bis 3,2 aufweist.

Geeignete cycloaliphatische Diisocyanate zur Herstellung der Hydroxyurethane B) sind beispielsweise solche des Molekulargewichtsbereiches 166 bis 318 g/mol, wie 1,3- bzw. 1,4-Diisocyanatocyclohexan, 1,4-Diisocyanato-3,3,5-trimethylcyclohexan, 1,3-Diisocyanato-2(4)-methylcyclohexan, 1-Isocyanato-3,3,5-trimethyl-5-isocyanatomethylcyclohexan (Isophorondiisocyanat, IPDI), 1-Isocyanato-1-methyl-4(3)isocyanato-methylcyclohexan, 1,8-Diisocyanato-p-menthan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetramethyl-1,1'-bi(cyclohexyl), 4,4'- und/oder 2,4'-Diisocyanatodicyclohexylmethan, 4,4'-Diisocyanato-3,3'-dimethyldicyclohexylmethan, 4,4'-Diisocyanato-3,3',5,5'-tetramethyldicyclohexylmethan, 1,3-Diisocyanatoadamantan, und 1,3-Dimethyl-5,7-diisocyanatoadamantan, sowie beliebige Gemische solcher Diisocyanate.

Ebenfalls geeignet sind die aus diesen cycloaliphatischen Diisocyanaten erhältlichen Polyisocyanate, insbesondere solche mit Isocyanurat-, Biuret-, Uretdion- und/oder Allophanatstruktur, wie sie beispielsweise in J. Prakt. Chem. 336 (1994) 185 - 200 und EP-A 0 649 866 beispielhaft beschrieben sind.

Bevorzugte cycloaliphatische Isocyanatkomponenten zur Herstellung der Hydroxyurethane B) sind IPDI, 1,3-Diisocyanato-2(4)-methylcyclohexan, 4,4'- und/oder 2,4'-Diisocyanatodicyclohexylmethan sowie Polyisocyanate auf Basis dieser Diisocyanate.

Besonders bevorzugt kommen IPDI, 4,4'- und/oder 4,2'-Diisocyanatodicyclohexylmethan, Polyisocyanuratpolyisocyanate auf Basis dieser Diisocyanate oder beliebige Gemische solcher Di- und Polyisocyanate zum Einsatz.

Zur Herstellung der Hydroxyurethane B) werden die genannten cycloaliphatischen Di- und/oder Polyisocyanate mit einem molaren Überschuss geeigneter hydroxyfunktioneller Verbindungen, bevorzugt solchen des Molekulargewichtsbereiches 32 bis 300 g/mol, umgesetzt.

Geeignete hydroxyfunktionelle Verbindungen sind beispielsweise niedermolekulare mehrwertige aliphatische und cycloaliphatische Alkohole, wie z. B. 1,2-Ethandiol, 1,2- und 1,3-Propandiol, die isomeren Butandiole, Pentandiole, Hexandiole, Heptandiole und Octandiole, 1,2- und 1,4-Cyclohexandiol, 1,4-Cyclohexandimethanol, 4,4'-(1-Methylethyliden)-biscyclohexanol, 1,2,3-Propantriol, 1,1,1-Trimethylolethan, 1,2,6-Hexantriol, 1,1,1-Trimethylolpropan, 2,2-Bis(hydroxymethyl)-1,3-propandiol und 1,3,5-Tris(2-hydroxyethyl)-isocyanurat, Etheralkohole, wie z. B. Diethylenglykol, Triethylenglykol, Tetraethylenglykol und die isomeren Dipropylenglykole, oder Esteralkohole, wie Neopentylglykolhydroxypivalat.

Geeignete hydroxyfunktionelle Verbindungen sind aber auch einfache Aminoalkohole, wie z. B. 2-Aminoethanol, 2-(Methylamino)ethanol, Diethanolamin, N-Methyl-diethanolamin, Triethanolamin, 3-Amino-1-propanol, 1-Amino-2-propanol, Bis-(2-hydroxypropyl)-amin, Bis-(2-hydroxypropyl)-methylamin, 2-(Hydroxyethyl)-bis-(2-hydroxypropyl)-amin, Tris-(2-hydroxypropyl)-amin, 4-Amino-2-butanol, 2-Amino-2-methylpropanol, 2-Amino-2-methyl-1,3-propandiol und 2-Amino-2-hydroxypropyl-1,3-propandiol.

Gegebenenfalls können bei der Herstellung der Hydroxyurethane B), beispielsweise zur Einstellung einer definierten OH-Funktionalität oder zur Erzielung spezieller Eigenschaften, aber auch einwertige Aufbaukomponenten mitverwendet werden, beispielsweise einfache Alkohole, wie z.B. Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole, Hydroxymethylcyclohexan, 3-Methyl-3-hydroxymethyloxetan, n-Hexanol, 2-Ethyl-1-hexanol oder 1-Methoxy-2-propanol und Tetrahydrofurfurylalkohol, monofunktionelle Etheralkohole, wie z. B. 2-Methoxyethanol, 2-Ethoxyethanol, 2-Propoxyethanol, 2-Butoxyethanol, Diethylenglykolmonomethylether, Diethylenglykol-monoethylether, Diethylenglykolmono-butylether, 3-Methoxy-1-butanol und Glycerin-1,3-diethylether, monofunktionelle Esteralkohole, wie z. B. Butylglycolat und Ethyllactat, monofunktionelle Dialkylaminoalkohole, wie z. B. 2-(Dimethylamino)-ethanol, 2-(Diethylamino)-ethanol, 2-(Dibutyl-amino)-ethanol, 3-Dimethylamino-1-propanol, 1-Dimethylamino-2-propanol, 1-Diethylamino-2-propanol und 2-(2-Dimethylaminoethoxy)-ethanol monofunktionelle Mercaptane, wie z. B. Butylmercaptan und Dodecylmercaptan, oder Monoamine wie z. B. Methylamin, Ethylamin, n-Propylamin, Isopropylamin, die isomeren Butylamine, Pentylamine, Hexylamine und Octylamine, n-Dodecylamin, n-Tetradecylamin, n-Hexadecylamin, n-Octadecylamin, Cyclohexylamin, die isomeren Methylcyclohexylamine, Aminomethylcyclohexan, 2-Methoxyethylamin, 3-Methoxypropylamin, Dimethylamin, Diethylamin, Dipropylamin, Diisopropylamin, Dibutylamin, Diisobutylamin, Bis-(2-ethylhexyl)-amin, N-Methyl- und N-Ethylcyclohexylamin oder Dicyclohexylamin.

Bei der Herstellung der Hydroxyurethane B) können die vorstehend genannten hydroxy-, mercapto- und/oder aminofunktionellen Verbindungen auch in Form beliebiger Gemische eingesetzt werden.

Bevorzugt kommen als Reaktionspartner für die genannten cycloaliphatischen Di- und/oder Polyisocyanate einfache Diole oder Aminoalkohole der genannten Art mit einem Molekulargewicht von 62 bis 150 g/mol, gegebenenfalls in Kombination mit Monoalkoholen oder Monoaminen der genannten Art zum Einsatz.

Ganz besonders bevorzugt ist die Verwendung von 1,3- und 1,4-Butandiol, 1,6-Hexandiol, 2,2,4-Trimethyl-1,3-pentandiol, 1,4-Cyclohexandimethanol, 2-(Methylamino)ethanol, Diethanolamin, n-Propanol, Isopropanol und/oder Dibutylamin.

Bei der Herstellung der Hydroxyurethane B) werden die genannten Ausgangskomponenten in solche Mengenverhältnissen miteinander zur Reaktion gebracht, dass die resultierenden Produkte die obengenannten Kenndaten aufweisen, d. h. ein mittleres Molekulargewicht von 260 bis 8000 g/mol, bevorzugt von 275 bis 6000 g/mol, besonders bevorzugt von 290 bis 5000 g/mol, und eine mittlere OH-Funktionalität von 1,0 bis 6,0, bevorzugt von 1,5 bis 4,0, besonders bevorzugt von 2,0 bis 3,2, aufweisen.

In Abhängigkeit von Art und Menge der zu ihrer Herstellung eingesetzten Rohstoffe stellen die Hydroxyurethane B) in der Regel viskose bis feste Substanzen dar. Sie können beim erfindungsgemäßen Verfahren zwar prinzipiell lösemittelfrei verwendet werden, bevorzugt kommen sie aber in mit geeigneten Lösemitteln gelöster Form zum Einsatz.

Geeignete Lösemittel hierfür sind beispielsweise die üblichen gegenüber Isocyanatgruppen inerten aus der Lackchemie bekannten Lacklösemittel, wie z. B. Ethylacetat, Butylacetat, Ethylenglykolmonomethyl- oder -ethyletheracetat, 1-Methoxypropyl-2-acetat, 3-Methoxy-n-butylacetat, Aceton, 2-Butanon, 4-Methyl-2-pentanon, Cyclohexanon, Toluol, Xylol, Chlorbenzol, Testbenzin, höher substituierte Aromaten, wie sie beispielsweise unter den Bezeichnungen Solventnaphtha, Solvesso®, Isopar®, Nappar® (Deutsche EXXON CHEMICAL GmbH, Köln, DE) und Shellsol® (Deutsche Shell Chemie GmbH, Eschborn, DE) im Handel sind, aber auch Lösemittel wie Propylenglykoldiacetat, Diethylenglykoldimethylether, Dipropylenglykoldimethylether, Diethylenglykolethyl- und -butyletheracetat, N-Methylpyrrolidon und N-Methylcaprolactam, oder beliebige Gemische solcher Lösemittel.

Die Durchführung des erfindungsgemäßen Verfahrens erfolgt in der Regel so, dass die Polyisocyanatkomponente A) vorzugsweise unter Inertgas bei einer Temperatur von 20 bis 150°C, vorzugsweise von 30 bis 120°C, vorgelegt wird und anschließend unter Rühren die gegebenenfalls in einem Lösemittel der genannten Art gelöst vorliegende Hydroxyurethankomponente B) in einer Menge vorzugsweise von 4 bis 60 Gew.-%, besonders bevorzugt von 6 bis 50 Gew.-%, bezogen auf die Gesamtmenge der Komponenten A) und B) berechnet auf lösemittelfreie Form, zugegeben wird.

Die Herstellung der Hydroxyurethane B) und die Umsetzung zu den erfindungsgemäßen Verfahrensprodukten kann unkatalysiert geschehen, zur Reaktionsbeschleunigung können aber auch die üblichen aus der Polyurethanchemie bekannten Urethanisierungskatalysatoren mitverwendet werden, beispielsweise tert. Amine wie Triethylamin, Pyridin, Methylpyridin, Benzyldimethylamin, N,N-Endoethylenpiperazin, N-Methylpiperidin, Pentamethyldiethylentriamin, N,N-Dimethylaminocyclohexan, N,N'-Dimethylpiperazin oder Metallsalze wie Eisen(III)-chlorid, Zinkchlorid, Zink-octoat, Zink-2-ethylcaproat, Zink-acetylacetonat, Zinn(II)-octoat, Zinn(II)-ethylcaproat, Zinn(II)-palmitat, Dibutylzinn(IV)-dilaurat, Zirconium-(IV)-2-ethyl-l-hexanoat, Zirconium-(IV)-neodecanoat, Zirconium-(IV)-naphthenat, Zirkonium-(IV)-acetylacetonat, Aluminium-tri(ethylaceto-acetat), Wismut(III)-2-ethylhexanoat, Wismut(III)-octoat, Wismut(III)-neodecanoat und Molybdänglykolat.

Diese Katalysatoren kommen gegebenenfalls in Mengen von 0,001 bis 2,0 Gew.-%, bevorzugt 0,01 bis 0,2 Gew.-%, bezogen auf die Gesamtmenge der verwendeten Ausgangskomponenten A) und B) zum Einsatz.

Der Verlauf der Umsetzung kann beim erfindungsgemäßen Verfahren durch z. B. titrimetrische Bestimmung des NCO-Gehaltes verfolgt werden. Nach vollständiger Urethanisierung liegen die erfindungsgemäßen Verfahrensprodukte als praktisch farblose klare Substanzen vor, die bei Bedarf mit den vorstehend genannten Lacklösemitteln auf eine gewünschte Viskosität eingestellt werden können.

Die neuen erfindungsgemäßen, cycloaliphatische Strukturelemente enthaltenden Polyisocyanatgemische besitzen, bezogen auf die lösemittelfreie Form, in der Regel einen Gehalt an linearaliphatisch gebundenen Isocyanatgruppen vorzugsweise von 6,0 bis 23,0 Gew.-%, besonders bevorzugt von 8,0 bis 22,0 Gew.-% und eine mittlere NCO-Funktionalität vorzugsweise von 2,0 bis 6,0, besonders bevorzugt von 2,5 bis 4,5.

Die erfindungsgemäßen, cycloaliphatische Strukturelemente enthaltenden Polyisocyanatgemische, die bevorzugt ausschließlich linearaliphatisch gebundene Isocyanatgruppen tragen, stellen wertvolle Ausgangsmaterialien zur Herstellung von Polyurethankunststoffen nach dem Polyadditionsverfahren dar.

Sie eignen sich in hervorragender Weise als Härter für Zweikomponenten-Polyurethanlacke, in denen als Polyhydroxylverbindungen die üblichen Polyetherpolyole, Polyesterpolyole Polycarbonatpolyole und/oder Polyacrylatpolyole als Reaktionspartner für die Polyisocyanatgemische vorliegen. Besonders bevorzugte Reaktionspartner für die erfindungsgemäßen Verfahrensprodukte sind Hydroxylgruppen aufweisende Polyacrylate, d. h. Polymerisate bzw. Copolymerisate von (Meth)acrylsäurealkylestem, gegebenenfalls mit Styrol oder anderen copolymerisierbaren olefinisch ungesättigten Monomeren.

Im allgemeinen besitzen die mit den erfindungsgemäßen Polyisocyanatgemischen formulierten Beschichtungsmittel, denen gegebenenfalls die auf dem Lacksektor üblichen Hilfs- und Zusatzmittel, wie z. B. Verlaufshilfsmittel, Farbpigmente, Füllstoffe oder Mattierungsmittel, einverleibt werden können, schon bei Raumtemperaturtrocknung gute lacktechnische Eigenschaften.

Im Vergleich zu Lackfilmen, die unter Verwendung von rein linearaliphatischen Polyisocyanaten, wie z. B. hochfunktionellen HDI-Trimerisaten, hergestellt wurden, zeichnen sich mit Hilfe der erfindungsgemäß hergestellten Polyisocyanatgemische vernetzte Beschichtungen, durch eine deutlich schnellere Trocknung sowie eine höhere Endhärte aus. Gegenüber den ebenfalls schnell trocknenden Lackfilmen, die entsprechend dem Stand der Technik Polyisoycanatgemische aus HDI- und IPDI-Trimerisaten als Vernetzerkomponente enthalten zeigen erfindungsgemäß erhaltene Beschichtungen darüberhinaus eine stark verbesserte Lösemittel- und Chemikalienbeständigkeit. Die erfindungsgemäßen cycloaliphatische Strukturelemente enthaltenden Polyisocyanatgemische vereinen somit die schnelle Trocknung und hohe Endhärte von cycloaliphatischen Polyisocyanatvernetzern mit der raschen chemischen Aushärtung und den daraus resultierenden guten Beständigkeiten von linearaliphatischen Polyisocyanaten.

Selbstverständlich lassen sie sich jedoch auch unter forcierten Bedingungen bei erhöhter Temperatur bzw. durch Einbrennen bei Temperaturen bis 260°C trocknen.

Zur Steuerung der Aushärtegeschwindigkeit können bei der Formulierung der Beschichtungsmittel geeignete Katalysatoren beispielsweise die oben beschriebenen, in der Polyurethanchemie üblichen Urethanisierungskatalysatoren, mitverwendet werden.

Selbstverständlich können die erfindungsgemäßen cycloaliphatische Strukturelemente enthaltenden Polyisocyanatgemische auch in mit aus der Polyurethanchemie an sich bekannten Blockierungsmitteln blockierter Form in Kombination mit den obengenannten Lackbindemitteln oder Lackbindemittelkomponenten im Sinne von Einkomponenten-PUR-Einbrennsystemen eingesetzt werden. Geeignete Blockierungsmittel sind beispielsweise Malonsäurediethylester, Acetessigester, aktivierte cyclische Ketone, wie z. B. Cyclopentanon-2-carboxymethylester und -carboxyethylester, Acetonoxim, Butanonoxim, ε-Caprolactam, 3,5-Dimethylpyrazol, 1,2,4-Triazol, Dimethyl-1,2,4-triazol, Imidazol, Benzyl-tert.-butylamin oder beliebige Gemische dieser Blockierungsmittel.

Gegenstand der Erfindung ist daher auch die Verwendung der erfindungsgemäßen Polyisocyanatgemische zur Herstellung von mit aus der Polyurethanchemie bekannten Blockierungsmitteln blockierten Polyisocyanaten, sowie die daraus resultierenden blockierten Polyisocyanate selbst.

Die erfindungsgemäßen Verfahrensprodukte können auch mit Polyaminen, wie z. B. den aus EP-B 0 403 921 bekannten Polyasparaginsäurederivaten, oder auch solchen Polyaminen, deren Aminogruppen in blockierter Form vorliegen, wie z. B. Polyketiminen, Polyaldiminen oder Oxazolanen, kombiniert werden. Aus diesen blockierten Aminogruppen entstehen unter Feuchtigkeitseinfluss freie Aminogruppen und im Falle der Oxazolane auch freie Hydroxylgruppen, die unter Vernetzung mit der Isocyanatgruppen der erfindungsgemäßen Polyisocyanatgemische abreagieren.

Die erfindungsgemäßen Polyisocyanatgemische eignen sich auch als Vernetzerkomponenten für in Wasser gelöst oder dispergiert vorliegende Bindemittel oder Bindemittelkomponenten mit gegenüber Isocyanatgruppen reaktionsfähigen Gruppen, insbesondere alkoholischen Hydroxylgruppen, bei der Herstellung wäßriger Zweikomponenten-Polyurethansysteme. Sie können dabei entweder als solche, d. h. in hydrophober Form, oder aber auch in nach bekannten Verfahren, z. B. gemäß EP-B 0 540 985, EP-B 0 959 087 oder EP-B 1 287 052, hydrophil modifizierter Form eingesetzt werden.

In allen Lackkombinationen liegen die erfindungsgemäßen Verfahrensprodukte und der Reaktionspartner in solchen Mengen vor, dass auf jede gegebenenfalls blockierte Isocyanatgruppe 0,5 bis 3, vorzugsweise 0,6 bis 2,0, besonders bevorzugt 0,8 bis 1,6 gegebenenfalls blockierte, gegenüber Isocyanaten reaktive Gruppen entfallen.

Gegebenenfalls können die erfindungsgemäßen Polyisocyanatgemische in untergeordneten Mengen aber auch nichtfunktionellen Lackbindemitteln zur Erzielung ganz spezieller Eigenschaften, beispielsweise als Additiv zur Haftverbesserung zugemischt werden.

Als Untergründe für die mit Hilfe der erfindungsgemäßen cycloaliphatische Strukturelemente enthaltenden Polyisocyanatgemische formulierten Beschichtungen kommen beliebige Substrate in Betracht, wie z. B. Metall, Holz, Glas, Stein, keramische Materialien, Beton, harte und flexible Kunststoffe, Textilien, Leder und Papier, die vor der Beschichtung gegebenenfalls auch mit üblichen Grundierungen versehen werden können.

Weitere Gegenstände dieser Erfindung sind somit Beschichtungsmittel enthaltend die erfindungsgemäßen Polyisocyanatgemische, sowie die mit diesen Beschichtungsmitteln beschichteten Substrate.

### Beispiele

Alle Prozentangaben beziehen sich, soweit nichts Anderslautendes vermerkt, auf das Gewicht.

Die Bestimmung der NCO-Gehalte erfolgte nach DIN EN ISO 11909.

Sämtliche Viskositätsmessungen erfolgten bei 23°C mit einem Physica MCR 51 Rheometer der Fa. Anton Paar Germany GmbH (Ostfildern) nach DIN EN ISO 3219.

### Ausgangspolyisocyanat A1)

Isocyanuratgruppen enthaltendes HDI-Polyisocyanat, hergestellt nach dem Verfahren der EP-A 0 330 966.

| | |
|---|---|
| Festkörpergehalt: | 100 % |
| NCO-Gehalt: | 21,6 % |
| monom. HDI: | 0,1 % |
| mittlere NCO-Funktionalität: | 3,4 |
| Viskosität: | 2500 mPas (23°C) |

### Ausgangspolyisocyanat A2)

Isocyanuratgruppen enthaltendes HDI-Polyisocyanat, hergestellt nach dem Verfahren der EP-A 0 330 966.

| | |
|---|---|
| Festkörpergehalt: | 100 % |
| NCO-Gehalt: | 23,0 % |
| monom. HDI: | 0,1 % |
| mittlere NCO-Funktionalität: | 3,1 |
| Viskosität: | 1200 mPas (23°C) |

### Auseangspolyisocyanat A3)

Iminooxadiazindiongruppen enthaltendes HDI-Polyisocyanat, hergestellt nach dem Verfahren der EP-A 0 798 299.

| | |
|---|---|
| Festkörpergehalt: | 100 % |
| NCO-Gehalt: | 23,5 % |
| monom. HDI: | 0,3 % |
| mittlere NCO-Funktionalität: | 3,1 |
| Viskosität: | 700 mPas (23°C) |

### Ausgangspolyisocyanat A4)

Uretdiongruppen enthaltendes HDI-Polyisocyanat, hergestellt nach dem Verfahren der EP-A 1 422 223.

| | |
|---|---|
| Festkörpergehalt: | 100 % |
| NCO-Gehalt: | 22,9 % |
| monom. HDI: | 0,1 % |
| mittlere NCO-Funktionalität: | 2,2 |
| Viskosität: | 100 mPas (23°C) |

### Ausgangspolyisocyanat A5)

Isocyanuratgruppen enthaltendes IPDI-Polyisocyanat, hergestellt nach dem Verfahren der EP-A 0 003 765.

| | |
|---|---|
| Festkörpergehalt: | 70 % in Butylacetat |
| NCO-Gehalt: | 11,8 % |
| monom. IPDI: | 0,3 % |
| mittlere NCO-Funktionalität: | 3,2 |
| Viskosität: | 600 mPas (23°C) |

### Ausgangspolyisocyanat A6)

Isocyanuratgruppen enthaltendes HDI-Polyisocyanat, hergestellt nach dem Verfahren der EP-A 0 330 966.

| | |
|---|---|
| Festkörpergehalt: | 90 % in Butylacetat |
| NCO-Gehalt: | 17,8 % |
| monom. HDI: | 0,1 % |
| mittlere NCO-Funktionalität: | 4,1 |
| Viskosität: | 1800 mPas (23°C) |

### Hydroxyurethan B1)

In einem Reaktionsgefäß mit Rührer, Thermometer und Rückflusskühler wurde ein Alkoholgemisch, bestehend aus 135 g (3,0 val) 1,3-Butandiol und 60 g (1,0 val) 1-Propanol zusammen mit 0,05 g DBTL in 622 g Butylacetat vorgelegt und auf 80°C aufgeheizt. Innerhalb 1 Stunde wurden bei dieser Temperatur 1068 g (3,0 val) des Ausgangspolyisocyanates A5) zudosiert. Anschließend wurde auf 110°C aufgeheizt und bis zur vollständigen Umsetzung (Verschwinden der NCO-Bande bei 2270 cm⁻¹ im IR-Spektrum) bei gleicher Temperatur gerührt. Man erhielt eine farblose klare Hydroxyurethan-Lösung mit folgenden Kenndaten (bezogen auf Lösung):

| | |
|---|---|
| Festkörpergehalt: | 50 % |
| OH-Gehalt: | 0,90 % |
| Äquivalent-Gewicht: | 1885 g/val OH |
| mittlere OH-Funktionalität: | 2,3 |

### Hydroxyurethan B2)

Nach dem für Hydroxyurethan B1) beschriebenen Verfahren wurden 1077 g 3,0 val) des Ausgangspolyisocyanates A5) mit einem Gemisch aus 219 g (3,0 val) 2,2,4-Trimethyl-1,3-pentandiol, 60 g (1,0 val) 2-Propanol, 0,08 g DBTL und 710 g Butylacetat umgesetzt. Man erhielt eine farblose klare Hydroxyurethan-Lösung mit folgenden Kenndaten (bezogen auf Lösung):

| | |
|---|---|
| Festkörpergehalt: | 50 % |
| OH-Gehalt: | 0,82 % |
| Äquivalent-Gewicht: | 2069 g/val OH |
| mittlere OH-Funktionalität: | 2,3 |

### Hydroxyurethan B3)

Nach dem für Hydroxyurethan B1) beschriebenen Verfahren wurden 111 g (1,0 val) IPDI mit 109,5 g 2,2,4-Trimethyl-1,3-pentandiol in 220,5 g Butylacetat umgesetzt. Man erhielt eine farblose klare Hydroxyurethan-Lösung mit folgenden Kenndaten (bezogen auf Lösung):

| | |
|---|---|
| Festkörpergehalt: | 50 % |
| OH-Gehalt: | 1,93 % |
| Äquivalent-Gewicht: | 879 g/val OH |
| mittlere OH-Funktionalität: | 2,0 |

### Hydroxyurethan B4)

Nach dem für Hydroxyurethan B1) beschriebenen Verfahren wurden 524 g (4,0 val) 4,4'-Diisocyanatodicyclohexylmethan in 962g Butylacetat mit 438 g (6,0 val) 2,2,4-Trimethyl-1,3-pentandiol in Gegenwart von 0,044 g DBTL als Katalysator umgesetzt. Man erhielt eine farblose klare Hydroxyurethan-Lösung mit folgenden Kenndaten (bezogen auf Lösung):

| | |
|---|---|
| Festkörpergehalt: | 50 % |
| OH-Gehalt: | 1,77 % |
| Äquivalent-Gewicht: | 959 g/val OH |
| mittlere OH-Funktionalität: | 2,0 |

### Hydroxyurethan B5)

Nach dem für Hydroxyurethan B1) beschriebenen Verfahren wurden 1068 g (3,0 val) des Ausgangspolyisocyanates A5) mit einem Gemisch aus 216 g (3,0 val) Cyclohexandimethanol, 60 g (1,0 val) 1-Propanol, 0,06 g DBTL und 703 g Butylacetat umgesetzt. Man erhielt eine farblose klare Hydroxyurethan-Lösung mit folgenden Kenndaten (bezogen auf Lösung):

| | |
|---|---|
| Festkörpergehalt: | 50% |
| OH-Gehalt: | 0,83% |
| Äquivalent-Gewicht: | 2045 g/val OH |
| mittlere OH-Funktionalität: | 2,3 |

### Hydroxyurethan B6)

Nach dem für Hydroxyurethan B1) beschriebenen Verfahren wurden 1068 g (3,0 val) des Ausgangspolyisocyanates A5) mit einem Gemisch aus 112,5 g (1,5 mol) 2-(Methylamino)ethanol, 129 g (1,0 mol) Dibutylamin und 668 g Butylacetat umgesetzt. Man erhielt eine farblose klare Hydroxyurethan-Lösung mit folgenden Kenndaten (bezogen auf Lösung):

| | |
|---|---|
| Festkörpergehalt: | 50 % |
| OH-Gehalt: | 0,86 % |
| Äquivalent-Gewicht: | 1973 g/val OH |
| mittlere OH-Funktionalität: | 2,3 |

### Hydroxyurethan B7)

Nach dem für Hydroxyurethan B1) beschriebenen Verfahren wurden 350 g (1,0 val) des Ausgangspolyisocyanates A5) mit einem Gemisch aus 146 g (2,0 val) 2,2,4-Trimethyl-1,3-pentandiol, 0,03 g DBTL und 156 g Butylacetat umgesetzt. Man erhielt eine farblose klare Hydroxyurethan-Lösung mit folgenden Kenndaten (bezogen auf Lösung):

| | |
|---|---|
| Festkörpergehalt: | 60 % |
| OH-Gehalt: | 2,61 % |
| Äquivalent-Gewicht: | 650 g/val OH |
| mittlere OH-Funktionalität: | 3,2 |

### Beispiel 1 (erfindungsgemäß)

In einem Rührgefäß mit Innenthermometer und Rückflußkühler wurden 2925 g Polyisocyanat A1) gemeinsam mit 715 g Butylacetat bei 80°C vorgelegt. Innerhalb von 2 h wurden 1885 g des Hydroxyurethans B1) - entsprechend einem NCO/OH-Äquivalentverhältnis von 15 : 1 - zudosiert und die Mischung weitere 2 h bei gleicher Temperatur gerührt. Anschließend wurde das Reaktionsgemisch auf 110°C aufgeheizt und weitere 3 h nachgerührt. Nach Abkühlen auf Raumtemperatur lag eine praktisch farblose klare Lösung eines erfindungsgemäßen Polyisocyanatgemisches mit folgenden Kenndaten vor:

| | |
|---|---|
| Feststoffgehalt: | 70 % |
| NCO-Gehalt: | 10,3 % |
| Viskosität: | 800 mPas |
| mittlere NCO-Funktionalität: | 3,6 |

### Beispiele 2 bis 9 (erfindungsgemäß)

Nach dem in Beispiel 1 beschriebenen Verfahren wurden unter Verwendung unterschiedlicher Polyisocyanatkomponenten A) und Hydroxyurethane B) cycloaliphatische Strukturelemente enthaltende Polyisocyanatgemische hergestellt. Die nachfolgende Tabelle zeigt die Zusammensetzungen (jeweils Gew.-Teile) und Kenndaten der erfindungsgemäßen Produkte.

| **Beispiel** | **2** | **3** | **4** | **5** | **6** | **7** | **8** | **9** |
|---|---|---|---|---|---|---|---|---|
| Ausgangspolyisocyanat A1) | 2925 | - | - | - | 2925 | 2925 | 1463 | 1463 |
| Ausgangspolyisocyanat A2) | - | 2739 | - | - | - | - | - | - |
| Ausgangspolyisocyanat A3) | - | - | 2681 | - | - | - | - | - |
| Ausgangspolyisocyanat A4) | - | - | - | 734 | - | - | - | - |
| Hydroxyurethan B1) | - | - | - | - | - | - | - | - |
| Hydroxyurethan B2) | 2069 | 2069 | 2069 | - | - | - | - | - |
| Hydroxyurethan B3) | - | - | - | - | - | - | 879 | - |
| Hydroxyurethan B4) | - | - | - | - | - | - | - | 959 |
| Hydroxyurethan B5) | - | - | - | - | 2045 | - | - | - |
| Hydroxyurethan B6) | - | - | - | - | - | 1973 | - | - |
| Hydroxyurethan B7) | - | - | - | 650 | - | - | - | - |
| Butylacetat | 662 | 223 | 204 | 21 | 669 | 690 | 376 | 353 |
| NCO/OH-Äquivalentverhältnis: | 15 | 15 | 15 | 4 | 15 | 15 | 7,5 | 7,5 |
| Feststoffgehalt [%]: | 70 | 75 | 75 | 80 | 70 | 70 | 70 | 70 |
| NCO-Gehalt [%]: | 10,4 | 11,7 | 11,9 | 9,0 | 10,4 | 10,5 | 10,0 | 9,8 |
| Viskosität [mPas]: | 500 | 1600 | 1100 | 8000 | 1000 | 500 | 600 | 900 |
| mittlere NCO-Funktionalität: | 3,6 | 3,3 | 3,3 | 2,7 | 3,6 | 3,6 | 3,8 | 3,8 |

### Beispiel 10 (Verwendung, erfindungsgemäß und Vergleich)

100 Gew.-Teile eines 72 %ig in Butylacetat gelösten hydroxyfunktionellen Polyacrylats mit einem OH-Gehalt von 3,4 %, im wesentlichen bestehend aus 38,9 % Hydroxyethylmethacrylat, 23,3 % Isobornylacrylat , 18,6 % Styrol, 9,4 % Methylmethacrylat, 8,4 % Ethylacrylat und 1,4 % Acrylsäure, wurden mit 0,5 Gew.-Teilen eines handelsüblichen Entlüfters (Tego® Airex 945, Fa. Tego) sowie 3,8 Gew.-Teilen einer 1 %igen Lösung von DBTL in Xylol als Katalysator gemischt und der Festkörpergehalt anschließend durch Zugabe von 20,7 Gew.-Teilen eines zu jeweils gleichen Teilen aus Butylacetat, Xylol und 1-Methoxypropyl-2-acetat bestehenden Lösungsmittelgemisches auf 58 % eingestellt. Diesem Ansatz wurden 80,0 Gew.-Teile des erfindungsgemäßen lösemittelhaltigen Polyisocyanatgemisches aus Beispiel 1 zugesetzt (entsprechend einem NCO/OH-Äquivalentverhältnis von 1 : 1) und die Mischung durch intensives Rühren (2000 U/min) homogenisiert. Anschließend wurde der Festkörpergehalt durch Zugabe von 52,0 Gew.-Teilen des oben beschriebenen Lösungsmittelgemisches aus Butylacetat, Xylol und 1-Methoxypropyl-2-acetat auf 50 % eingestellt.

Zum Vergleich wurden nach dem gleichen Verfahren aus jeweils 100 Gew.-Teilen des oben beschriebenen hydroxyfunktionellen Polyacrylats, 0,5 Gew.-Teilen Tego® Airex 945 und 3,8 Gew.-Teilen der vorstehend beschriebenen DBTL-Lösung unter Verwendung von 47,2 Gew.-Teilen des Polyisocyanates A6) (= Vergleich 10 b) bzw. unter Verwendung von 45,0 Gew.-Teilen eines zu 70 % aus Polyisocyanat A1) und zu 30 % aus Polyisocyanat A5) bestehenden Polyisocyanatgemisches (= Vergleich 10 c), jeweils entsprechend einem NCO/OH-Äquivalentverhältnis von 1 : 1, Klarlacke hergestellt. Die Festkörpergehalt wurden durch Zugabe von insgesamt 83,2 Gew.-Teilen (10 b) bzw. 77,6 Gew.-Teilen des oben beschriebenen, aus gleichen Anteilen Butylacetat, Xylol und 1-Methoxypropyl-2-acetat bestehenden Lösungsmittelgemisches ebenfalls auf 50 % eingestellt.

Die Lacke wurden in einer Nassfilm-Schichtdicke von 100 µm (ca. 50 µm trocken) auf Glasplatten appliziert und nach 15 minütigem Ablüften sowohl bei Raumtemperatur als auch unter forcierten Bedingungen (30 min / 60 °C) getrocknet. Es wurden in allen Fällen hochglänzende transparente Lackfilme erhalten. Die nachfolgende Tabelle zeigt einen Vergleich der lacktechnologischen Eigenschaften der Lackansätze sowie der erhaltenen Beschichtungen:

| **Polyisocyanat aus** | | | **Beispiel 10 a** (erf.-gemäß) | **Beispiel 10 b** (Vergleich) | **Beispiel 10 c** (Vergleich) |
|---|---|---|---|---|---|
| Auslaufzeit ^{a)} | Startwert | [s] | 17 | 19 | 18 |
| | nach 1 h | [s] | 20 | 29 | 20 |
| | nach 2 h | [s] | 29 | 38 | 30 |
| | nach 4 h | [s] | 45 | 79 | 45 |
| Trocknungzeit bei RT | | [min] | 55 | 120 | 70 |
| Trocknung T3^{b)} nach 10'/60°C | | [s] | 30 | 80 | 60 |
| Trocknung T4^{b)} nach 20'/60°C | | [s] | 10 | 30 | 10 |
| Pendelhärte ^{c)} | | [s] | 171 | 101 | 144 |
| Benzinbeständigkeit ^{d)} | | | | | |
| | RT-Trocknung | 1d | 2 | 1 | 3 |
| | | 2d | 1 | 0 | 1 |
| | | 3d | 0 | 0 | 1 |
| | | 7d | 0 | 0 | 1 |
| | 20 min/60°C | 1d | 1 | 1 | 3 |
| | | 2d | 0 | 0 | 1 |
| | | 3d | 0 | 0 | 1 |
| | | 7d | 0 | 0 | 1 |

| | | | | | |
|---|---|---|---|---|---|
| ^{a)} gemessen mit dem 4 mm ISO-Auslaufbecher nach DIN EN ISO 2431 bei 20°C ^{b)} Trockengrad (DIN 53150) ^{c)} Pendelhärte nach König (DIN 53157), Lackfilme getrocknet 30'/60°C, anschl. 7 Tage RT ^{d)} 5 min, Bewertung: 0 - 5 (0 = Lackfilm unverändert; 5 = völlig aufgelöst) | | | | | |

Der Vergleich zeigt, dass der mit Hilfe des erfindungsgemäß hergestellten Polyisocyanatgemisches formulierte Lackansatz (Beispiel 10 a) eine längere Topfzeit (siehe Auslaufzeit), aber eine deutlich schnellere Trocknung sowie eine höhere Endhärte aufweist als der unter Verwendung des hochfunktionellen HDI-Trimerisates A6) hergestellte Lack (Vergleichsbeispiel 10 b). Gegenüber dem ebenfalls schnell trocknenden Lackfilm, der mit dem Polyisoycanatgemisch aus HDI- und IPDI-Trimerisat vernetzt wurde (Vergleichsbeispiel 10 c), zeichnet sich die erfindungsgemäß erhaltene Beschichtung insbesondere durch eine stark verbesserte Chemikalienbeständigkeit (siehe Benzinfestigkeit) aus.

### Beispiele 11 bis 13 (Verwendung)

Nach dem in Beispiel 10 beschriebenen Verfahren wurden ausgehend von dem dort beschriebenen Polyacrylatpolyol unter Verwendung unterschiedlicher erfindungsgemäßer Polyisocyanatgemische und Einhaltung eines NCO/OH-Äquivalentverhältnisses von 1 : 1 Klarlacke hergestellt, auf Glasplatten appliziert und ausgehärtet. Die nachstehende Tabelle zeigt die Zusammensetzungen (jeweils Gew.-Teile) der hergestellten Lackformulierungen sowie lacktechnologische Eigenschaften der erhaltenen Beschichtungen.

| **Beispiel** | | | **11** | **12** | **13** |
|---|---|---|---|---|---|
| Polyisocyanat aus Beispiel 2 | | | 80,8 | - | - |
| Polyisocyanat aus Beispiel 4 | | | - | 70,6 | - |
| Polyisocyanat aus Beispiel 6 | | | - | - | 80,8 |
| Polyacrylatpolyol aus Beispiel 10 | | | 100,0 | 100,0 | 100,0 |
| Tego® Airex 945 | | | 0,5 | 0,5 | 0,5 |
| DBTL-Lösung (1%ig in Xylol) | | | 3,8 | 3,8 | 3,8 |
| Butylacetat, Xylol, MPA (1:1:1) | | | 73,0 | 76,0 | 73,0 |
| Feststoffgehalt [%]: | | | 50 | 50 | 50 |
| Auslaufzeit ^{a)} | Startwert | [s] | 17 | 19 | 20 |
| | nach 1 h | [s] | 20 | 23 | 27 |
| | nach 2 h | [s] | 22 | 25 | 37 |
| | nach 4 h | [s] | 35 | 31 | 47 |
| Trocknungzeit bei RT | | [min] | 60 | 70 | 80 |
| Trocknung T3^{b)} nach 10'/60°C | | [s] | 40 | 25 | 65 |
| Trocknung T4^{b)} nach 20'/60°C | | [s] | 0 | 15 | 20 |
| Pendelhärte ^{c)} | | [s] | 145 | 136 | 138 |
| Benzinbeständigkeit ^{d)} | | | | | |
| | RT-Trocknung | 1d | 2 | 2 | 1 |
| | | 2d | 0 | 0 | 1 |
| | | 3d | 0 | 0 | 0 |
| | | 7d | 0 | 0 | 0 |
| | 20 min/60°C | 1d | 2 | 2 | 1 |
| | | 2d | 0 | 0 | 1 |
| | | 3d | 0 | 0 | 0 |
| | | 7d | 0 | 0 | 0 |

| | | | | | |
|---|---|---|---|---|---|
| ^{a)} gemessen mit dem 4 mm ISO-Auslaufbecher nach DIN EN ISO 2431 bei 20°C ^{b)} Trockengrad (DIN 53150) ^{c)} Pendelhärte nach König (DIN 53157), Lackfilme getrocknet 30'/60°C, anschl. 7 Tage RT ^{d)} 5 min, Bewertung: 0 - 5 (0 = Lackfilm unverändert; 5 = völlig aufgelöst) | | | | | |

## Patentansprüche

1. Verfahren zur Herstellung von Polyisocyanatgemischen, enthaltend cycloaliphatische Strukturelemente sowie, bezogen auf die lösemittelfreie Form, einen Gehalt an linearaliphatisch gebundenen freien Isocyanatgruppen von 4,0 bis 26,0 Gew.-% und eine mittlere NCO-Funktionalität von 1,9 bis 8,0, bei dem
A) eine Polyisocyanatkomponente einer mittleren Funktionalität von 2,0 bis 5,0, mit einem Gehalt an linearaliphatisch gebundenen Isocyanatgruppen (berechnet als NCO; Molekulargewicht = 42) von 8,0 bis 27,0 Gew.-%
mit
B) 2 bis 80 Gew.-%, bezogen auf die Gesamtmenge der eingesetzten Komponenten A) und B), mindestens eines auf einem cycloaliphatischen Di- und/oder Polyisocyanat basierenden isocyanatgruppenfreien, gegebenenfalls Harnstoffgruppen enthaltenden Hydroxyurethans eines zahlenmittleren Molekulargewichtes von 260 bis 8000 g/mol, das eine mittlere OH-Funktionalität von 1,0 bis 6,0 aufweist,
umgesetzt wird.

2. Verfahren gemäß Anspruch 1, **dadurch gekennzeichnet, dass** die in den Polyisocyanatgemischen enthaltenen Isocyanatgruppen ausschließlich linearaliphatisch gebunden sind.

3. Verfahren gemäß Anspruch 1 oder 2, **dadurch gekennzeichnet, dass** in A) Polyisocyanate mit Uretdion-, Isocyanurat-, Allophanat-, Biuret- und/oder Iminooxadiazindionstrukturen auf Basis von Hexamethylendiisocyanat eingesetzt werden.

4. Verfahren gemäß einem der Ansprüche 1 bis 3, **dadurch gekennzeichnet, dass** in B) Hydroxyurethane mit einem mittleren Molekulargewicht von 290 bis 5000 g/mol eingesetzt werden.

5. Verfahren gemäß einem der Ansprüche 1 bis 4, **dadurch gekennzeichnet, dass** in B) Hydroxyurethane mit einer mittleren OH-Funktionalität von 2,0 bis 3,2 eingesetzt werden.

6. Verfahren gemäß einem der Ansprüche 1 bis 5, **dadurch gekennzeichnet, dass** bei der Herstellung der in B) eingesetzten Hydroxyurethane cycloaliphatische Isocyanate ausgewählt aus der Gruppe bestehend aus Isophorondiisocyanat, 1,3-Diisocyanato-2(4)-methylcyclohexan, 4,4'- und/oder 2,4'-Diisocyanatodicyclohexylmethan sowie Polyisocyanaten auf Basis dieser Diisocyanate eingesetzt werden.

7. Verfahren gemäß einem der Ansprüche 1 bis 6, **dadurch gekennzeichnet, dass** bei der Herstellung der in B) eingesetzten Hydroxyurethane isocyanatreaktive Verbindungen ausgewählt aus der Gruppe bestehend aus 1,3- und 1,4-Butandiol, 1,6-Hexandiol, 2,2,4-Trimethyl-1,3-pentandiol, 1,4-Cyclohexandimethanol, 2-(Methylamino)ethanol, Diethanolamin, n-Propanol, Isopropanol und Dibutylamin eingesetzt werden.

8. Verfahren gemäß einem der Ansprüche 1 bis 7, **dadurch gekennzeichnet, dass** die Komponente B) in einer Menge von 4 bis 60 Gew.-% bezogen auf die Gesamtmenge der Komponente A) und B) im erfindungsgemäßen Verfahren eingesetzt wird, wobei sich die Prozentangabe auf Festgehalt bezieht.

9. Verfahren gemäß einem der Ansprüche 1 bis 8, **dadurch gekennzeichnet, dass** die Komponenten A) und B) sowie deren Umsetzung miteinander so ausgestaltet ist, dass in den so erhaltenen Polyisocyanatgemischen der Gehalt an linearaliphatisch gebundenen Isocyanatgruppen 6,0 bis 23,0 Gew.-% und die mittlere NCO-Funktionalität 2,0 bis 6,0 beträgt.

10. Polyisocyanatgemische erhältlich nach einem Verfahren gemäß einem der Ansprüche 1 bis 9.

11. Polyisocyanatgemische gemäß Anspruch 10, **dadurch gekennzeichnet, dass** die enthaltenen Isocyanatgruppen anteilig oder vollständig blockiert sind.

12. Verwendung der Polyisocyanatgemische nach Anspruch 10 oder 11 bei der Herstellung von Polyurethankunststoffen, Beschichtungen oder Verklebungen.

13. Beschichtungsmittel erhältlich unter Verwendung von Polyisocyanatgemischen gemäß Anspruch 10 oder 11.

14. Substrate beschichtet mit Beschichtungen erhältlich unter Verwendung von Beschichtungsmitteln gemäß Anspruch 13.

## Claims

1. Process for preparing polyisocyanate mixtures comprising cycloaliphatic structural elements and also, based on the solvent-free form, a linear-aliphatically attached free isocyanate group content of 4.0 to 26.0% by weight and an average NCO functionality of 1.9 to 8.0, wherein
A) a polyisocyanate component having an average functionality of 2.0 to 5.0 and a linear-aliphatically attached isocyanate group content (calculated as NCO; molecular weight = 42) of 8.0% to 27.0% by weight
is reacted with
B) 2 to 80% by weight, based on the total amount of components A) and B) employed, of at least one hydroxyurethane which is based on a cycloaliphatic di- and/or polyisocyanate, is free from isocyanate groups, optionally contains urea groups, has a number-average molecular weight of 260 to 8000 g/mol and has an average OH functionality of 1.0 to 6.0.

2. Process according to Claim 1, **characterized in that** the isocyanate groups contained in the polyisocyanate mixtures are exclusively linear-aliphatically attached.

3. Process according to Claim 1 or 2, **characterized in that** in A) polyisocyanates with uretdione, isocyanurate, allophanate, biuret and/or iminooxadiazinedione structures based on hexamethylene diisocyanate are used.

4. Process according to any one of Claims 1 to 3, **characterized in that** in B) hydroxyurethanes having an average molecular weight of 290 to 5000 g/mol are used.

5. Process according to any one of Claims 1 to 4, **characterized in that** in B) hydroxyurethanes having an average OH functionality of 2.0 to 3.2 are used.

6. Process according to any one of Claims 1 to 5, **characterized in that** the hydroxyurethanes used in B) are prepared using cycloaliphatic isocyanates selected from the group consisting of isophorone diisocyanate, 1,3-diisocyanato-2(4)-methylcyclohexane, 4,4'- and/or 2,4'-diisocyanatedicyclohexylmethane and also polyisocyanates based on these diisocyanates.

7. Process according to any one of Claims 1 to 6, **characterized in that** the hydroxyurethanes used in B) are prepared using isocyanate-reactive compounds selected from the group consisting of 1,3- and 1,4-butanediol, 1,6-hexanediol, 2,2,4-trimethyl-1,3-pentanediol, 1,4-cyclohexanedimethanol, 2-(methylamino)ethanol, diethanolamine, n-propanol, isopropanol and dibutylamine.

8. Process according to any one of Claims 1 to 7, **characterized in that** component B) is used in an amount of 4% to 60% by weight, based on the total amount of component A) and B), in the process of the invention, the percentage figure being based on solids content.

9. Process according to any one of Claims 1 to 8, **characterized in that** components A) and B) and also their reaction with one another is configured such that the linear-aliphatically attached isocyanate group content of the resultant polyisocyanate mixtures is 6.0 to 23.0% by weight and the average NCO functionality is 2.0 to 6.0.

10. Polyisocyanate mixtures obtainable by a process according to any one of Claims 1 to 9.

11. Polyisocyanate mixtures according to Claim 10, **characterized in that** the isocyanate groups contained are proportionally or completely blocked.

12. Use of the polyisocyanate mixtures according to Claim 10 or 11 in the production of polyurethane plastics, coatings or adhesive bonds.

13. Coating compositions obtainable using polyisocyanate mixtures according to Claim 10 or 11.

14. Substrates coated with coatings obtainable using coating compositions according to Claim 13.

## Revendications

1. Procédé pour la préparation de mélanges de polyisocyanates, contenant des éléments structuraux cycloaliphatiques ainsi que, par rapport à la forme exempte de solvant, une teneur en groupes isocyanate libres liés de manière aliphatique linéaire, de 4,0 à 26,0% en poids et une fonctionnalité NCO moyenne de 1,9 à 8,0, dans lequel on transforme
A) un composant polyisocyanate présentant une fonctionnalité moyenne de 2,0 à 5,0, présentant une teneur en groupes isocyanate liés de manière aliphatique linéaire (calculée sous forme de NCO ; poids moléculaire = 42) de 8,0 à 27,0% en poids avec
B) 2 à 80% en poids, par rapport à la quantité totale des composants A) et B) utilisés, d'au moins un hydroxyuréthane, basé sur un diisocyanate et/ou un polyisocyanate cycloaliphatique, exempt de groupes isocyanate, contenant le cas échéant des groupes urée, d'un poids moléculaire moyen en nombre de 260 à 8000 g/mole, présentant une fonctionnalité OH moyenne de 1,0 à 6,0.

2. Procédé selon la revendication 1, **caractérisé en ce que** les groupes isocyanate contenus dans les mélanges de polyisocyanates sont liés exclusivement de manière aliphatique linéaire.

3. Procédé selon la revendication 1 ou 2, **caractérisé en ce qu'**on utilise, dans A), des polyisocyanates présentant des structures uretdione, isocyanurate, allophanate, biuret et/ou iminooxadiazinedione à base de diisocyanate d'hexaméthylène.

4. Procédé selon l'une quelconque des revendications 1 à 3, **caractérisé en ce qu'**on utilise, dans B), des hydroxyuréthanes présentant un poids moléculaire moyen de 290 à 5000 g/mole.

5. Procédé selon l'une quelconque des revendications 1 à 4, **caractérisé en ce qu'**on utilise, dans B), des hydroxyuréthanes présentant une fonctionnalité OH moyenne de 2,0 à 3,2.

6. Procédé selon l'une quelconque des revendications 1 à 5, **caractérisé en ce que**, lors de la préparation des hydroxyuréthanes utilisés dans B), on utilise des isocyanates cycloaliphatiques choisis dans le groupe constitué par le diisocyanate d'isophorone, le 1,3-diisocyanato-2(4)-méthylcyclohexane, le 4,4'-diisocyanatodicyclohexylméthane et/ou le 2,4'-diisocyanatodicyclohexylméthane ainsi que les polyisocyanates à base de ces diisocyanates.

7. Procédé selon l'une quelconque des revendications 1 à 6, **caractérisé en ce que**, lors de la préparation des hydroxyuréthanes utilisés dans B), on utilise des composés réactifs avec isocyanate choisis dans le groupe constitué par le 1,3-butanediol et le 1,4-butanediol, le 1,6-hexanediol, le 2,2,4-triméthyl-1,3-pentanediol, le 1,4-cyclohexanediméthanol, le 2-(méthylamino)éthanol, la diéthanolamine, le n-propanol, l'isopropanol et la dibutylamine.

8. Procédé selon l'une quelconque des revendications 1 à 7, **caractérisé en ce que** le composant B) est utilisé en une quantité de 4 à 60% en poids par rapport à la quantité totale des composants A) et B) dans le procédé selon l'invention, le pourcentage en poids se rapportant à la teneur en solides.

9. Procédé selon l'une quelconque des revendications 1 à 8, **caractérisé en ce que** les composants A) et B) ainsi que leur transformation l'un avec l'autre sont conçus de manière telle que, dans les mélanges de polyisocyanates ainsi obtenus, la teneur en groupes isocyanate liés de manière aliphatique linéaire est de 6,0 à 23,0% en poids et la fonctionnalité NCO moyenne est de 2,0 à 6,0.

10. Mélanges de polyisocyanates pouvant être obtenus selon un procédé selon l'une quelconque des revendications 1 à 9.

11. Mélanges de polyisocyanates selon la revendication 10, **caractérisés en ce que** les groupes isocyanate contenus sont partiellement ou complètement bloqués.

12. Utilisation des mélanges de polyisocyanates selon la revendication 10 ou 11 pour la préparation de matériaux synthétiques à base de polyisocyanate, de revêtements ou de collages.

13. Revêtements, pouvant être obtenus avec utilisation de mélanges de polyisocyanates selon la revendication 10 ou 11.

14. Substrats revêtus par des revêtements pouvant être obtenus avec utilisation d'agents de revêtement selon la revendication 13.
